# EUROPEAN PATENT SPECIFICATION

(11) **EP 3 404 811 B1**
(45) Date of publication and mention of the grant of the patent: **05.08.2020**
(21) Application number: 17171022.1
(22) Date of filing: 15.05.2017
(51) Int. Cl.: H02K 17/22, H02K 13/00, H02K 17/30, H01R 39/08, H01R 39/42

(54) **SLIPRING UNIT FOR A WOUND ROTOR MOTOR**
SCHLEIFRINGKÖRPER FÜR EINEN GEWICKELTEN LÄUFERMOTOR
UNITÉ DE BAGUE COLLECTRICE POUR UN MOTEUR À ROTOR BOBINÉ

(43) Date of publication of application: 21.11.2018
(73) Proprietor: ABB Schweiz AG, 5400 Baden (CH)
(72) Inventor: CAMPOREALE, Carlo, 70056 Molfetta(BA) (IT); MOIOLI, Giuseppe, 20037 Paderno Dugnano (MI) (IT)
(74) Representative: Gregorj S.r.l.

(56) References cited:
- EP-A1- 0 858 148
- GB-A- 555 316
- US-A- 5 285 125

## Description

### BACKGROUND

### Technical field

The present invention relates to a wound rotor motor (also called slipring motor) comprising a slipring unit, in particular a slipring unit having movable brushes.

### Description of the Related Art

Wound rotor motors are particular asynchronous motors including a rotatable shaft with a wound rotor core and a ring bushing, carrying metallic rings, fitted on the shaft. The rotor circuit is connected to an external rheostat allowing to modify the rotor resistance. Considering a 3-phase motor, the ring bushing comprises three rings, each connected by cables to a single rotor winding phase. The rotor rotates integrally with the shaft. Slipring motors also include three groups of brushes, one for each phase, electrically connected to the rheostat and electrically insulated from the stator. The brushes are in contact with the rings and can be lifted.

When the motor is in a stop condition, the brushes are in contact with the rings, and the rings (and consequently the rotor windings) are electrically insulated.

The motor includes an actuating device moved by an actuator. When the motor is started, the actuator moves the actuating device such that:
- the three rings and consequently the three rotor phases are short-circuited;
- the brushes are lifted so to minimize unnecessary wear and dirt accumulation caused by the brush carbon dust.

When the rotor phases are short-circuited the rotor works similarly to a common squirrel cage rotor.

The actuating device comprises a complex mechanism allowing the calibrated movements for short-circuiting the rings and for raising the brushes. This mechanism requires a difficult setting and maintenance and results in high costs of the motor. A wound rotor motor according to the preamble of claim 1 is disclosed in document US 5,285,125 A.

### BRIEF SUMMARY OF THE INVENTION

The object of the present invention is therefore to provide a wound rotor motor comprising a slipring unit configured such that short-circuiting the rotor windings and raising the brushes are obtained in a simpler manner with a mechanism which is sufficiently easy to be set-up and to be maintained, so to reduce the overall costs of the unit.

This and other objects are achieved by a wound rotor motor in accordance with claim 1.

Dependent claims define possible advantageous embodiments of the invention.

### BRIEF DESCRIPTION OF THE DRAWINGS

Further characteristics and advantages of the wound rotor motor according to the invention will be more apparent from the following description of preferred embodiments given as a way of an example with reference to the enclosed drawings in which:

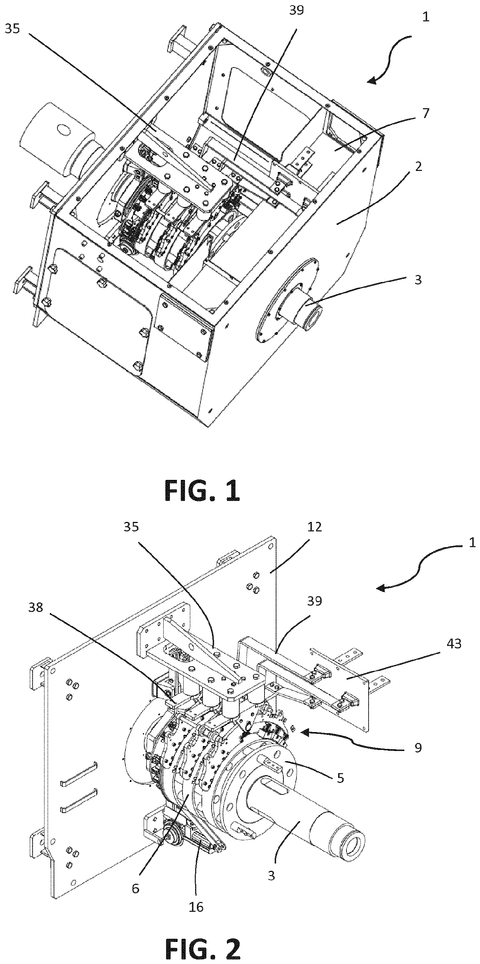

Figure 1 shows a perspective view of a slipring unit for a wound rotor motor according to an embodiment of the invention;
Figure 2 shows a perspective view of a portion of the slipring unit in Figure 1;

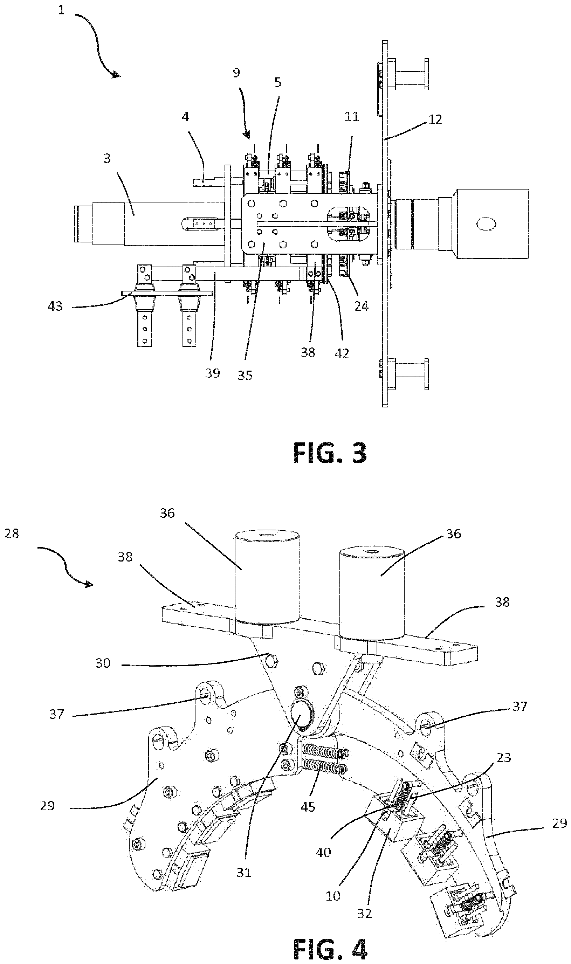

Figure 3 is a plan view of the portion of the slipring unit in Figure 2;
Figure 4 is a perspective view of a particular of the slipring unit according to an embodiment of the invention;
Figures 5a and 5b are side views of a portion of the slipring unit according to an embodiment of the invention in a first configuration;
Figures 6a and 6b are side views of the portion of the slipring unit in Figures 5a and 5b in a second configuration;
Figure 7 is a side view of a particular of the slipring unit according to a further possible embodiment.

### DETAILED DESCRIPTION

With reference to the annexed Figures, a slipring unit for a wound rotor motor (or slipring motor) is indicated with reference 1. The slipring unit 1 can be housed in a covering box 2 at least locally openable for the slipring unit 1 inspection. The unit 1 comprises a shaft 3 rotatable relative to the covering box 2 and at least partially protruding outside, and a stator not shown in the Figures. The shaft 3 in turn comprises a rotor. The unit 1 comprises a support plate 12 supporting the unit 1. The support plate 12 can in turn be connected to the covering box 2 or be a part of it.

The unit 1 further comprises a ring bushing 5, carrying at least one electrically conductive ring 6, fitted on the shaft 3. If the motor is a 3-phase motor, the ring bushing 5 comprises three rings 6, each connected to a respective rotor winding phase for example by connecting bars 4.

The rotor circuit can be connected to an external rheostat in order to modify the rotor resistence. The rheostat can be connected to a connections plate 43 which can be housed in a rheostat cables housing 7 formed in the covering box 2, which can be positioned on both sides of the unit 1, and connected to rotor circuit through conductive bars, which will be described in more detail below.

The unit 1 comprises at least one brushes assembly 9, in particular a brushes assembly for each of rings 6, wherein each brushes assembly 9 comprises one or more brushes 10 movable between a lowered position, wherein the brush 10 is in contact with the respective ring 6, and a raised position, wherein the brush 10 is at a distance from the respective ring 6.

The unit 1 further comprises a short-circuiting bushing 11 integrally rotatable with the shaft 3 and slidingly movable relative to the latter. In particular, the short-circuiting bushing 11 is movable between a short-circuiting position and a non-short circuiting position. In the short-circuiting position, the short-circuiting bushing 11 interacts with the ring bushing 5, in particular with a contacts plate 42 of the ring bushing 5, such that the rings 6, and consequently the rotor phases are short-circuited, whilst in the non-short-circuiting position the short-circuiting bushing 11 is at a distance from the contacts plate 42 and does not interact with the rings 6, such that the rings 6, and consequently the rotor windings are electrically insulated. When the rotor phases are short-circuited the rotor works like a squirrel cage rotor.

The unit 1 further comprises an actuating device 13 for moving both the brushes 10 (in particular, half-plates 29 supporting the brushes 10, as will be described in more detail below) between the lowered and raised positions, and the short-circuiting bushing 11 between the non-short-circuiting and the short-circuiting positions. In particular, when the motor is switched-off, the brushes 10 are in contact with the rings 6 and the rings 10 are electrically insulated. When the motor is started and the nominal torque is reached, the actuating device:
- moves the short-circuiting bushing 11 from the non-short-circuiting position to the short-circuiting position;
- moves the brushes 10 from the lowered position to the raised position.

The actuating device 13 comprises an actuator 16 (which is of the linear type) fixedly connected to the support plate 12 and at least one main lever 14 hinged to the support plate 12 at a main pivot 15. According to a possible embodiment, the actuating device 13 comprises a couple of main levers 14, one in each side of the shaft 3. The main pivot 15 and the actuator 16 are in opposite positions with respect to the shaft 3. The actuator 16 is connected directly or indirectly to the main levers 14 and drives the latter such that the main levers 14 oscillate around the main pivot 15. In particular, the main levers 14 are moved by the actuator 16 between a first position and a second position. In accordance with ; the invention, the actuator 16 is a linear actuator and comprises an actuator shaft 17 parallel to the shaft 3, movable between a retracted position and an extended position. The actuator shaft 17 can be connected to the main levers 14 through an intermediate lever 18 hinged to the actuator shaft 17 on one side and to the main levers 14 on a second side at an auxiliary pivot 19. In this manner, when the actuator shaft 17 is in the retracted position, the main levers 14 are in the first position, and when the actuator shaft 17 is in the extended position, the main levers 14 are in the second position.

Furthermore, the main levers 14 are connected to the short-circuiting bushing 11, preferably by stud bearings 20 positioned between the main pivot 15 and the auxiliary pivot 19, in such a manner that, when the main levers 14 move from the first to the second position, and vice versa, the short-circuiting bushing 11 moves respectively from the non-short-circuiting position to the short-circuiting position, and vice versa, by sliding along the shaft 3 while rotating integrally with the latter.

Furthermore, the main levers 14 are connected at a lanyards pivot 22 to a brushes lifting mechanism 21 which moves the brushes between the lowered and the raised positions. In accordance with a possible embodiment, the lanyards pivot 22 is positioned such that the main pivot 15 is between the lanyards pivot 22 itself and the auxiliary pivot 19, and the brushes lifting mechanism 21 comprises one or more lanyards 23 connected to the main levers 14 at the lanyards pivot 22 on one side and to the brushes 10, in particular to the half-plates 29, to the other side, such that, when the main levers 14 are in the first position, the brushes 10 are in the lowered position, and, when the main levers 14 are in the second position, the half-plates 29 and consequently the brushes 10 are in the raised position because the lanyards 23 are pulled by the main levers 14 at lanyards pivot 22.

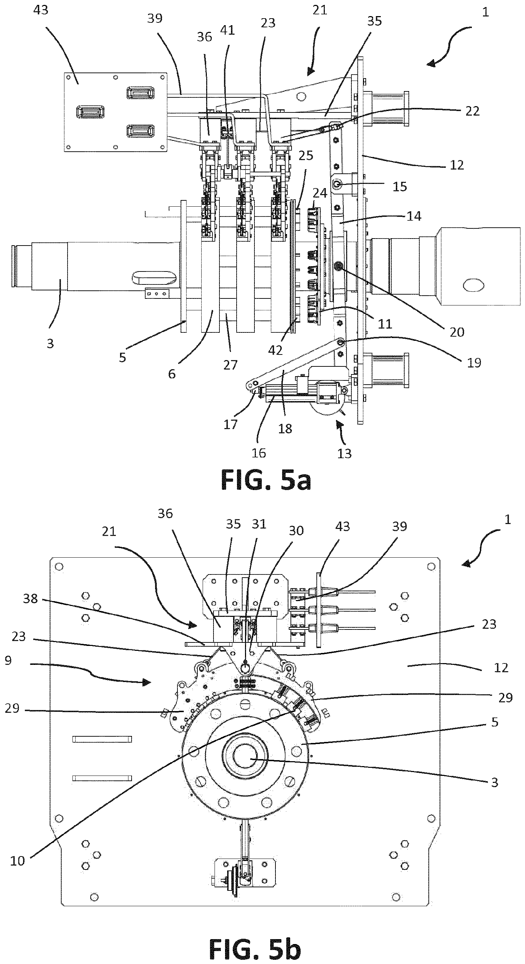

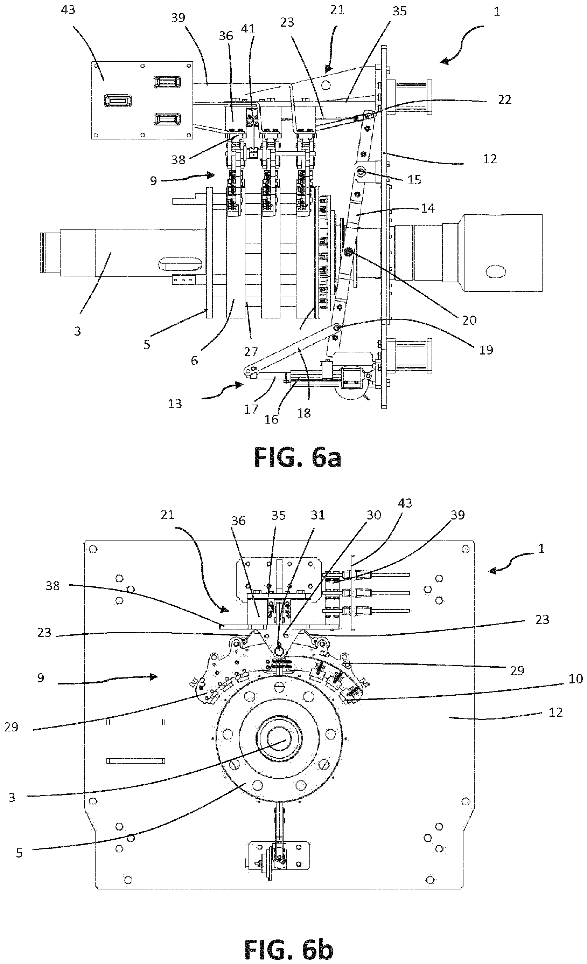

Therefore, briefly summarizing:
- when the actuator shaft 17 is in the retracted position (as shown in Figures 5a and 5b):
   ∘ the main levers 14 are in the first position;
   ∘ the short-circuiting bushing 11 is in the non-short-circuiting position;
   ∘ the brushes 10 are in the lowered position;
   ∘ the motor is in starting position;
- when the actuator shaft 17 is in the extended position (as shown in Figures 6a and 6b):
   ∘ the main levers 14 are in the second position;
   ∘ the short-circuiting bushing 11 is in the short-circuiting position;
   ∘ the brushes 10 are in the raised position;
   ∘ the motor is in a normal continuous operation condition.

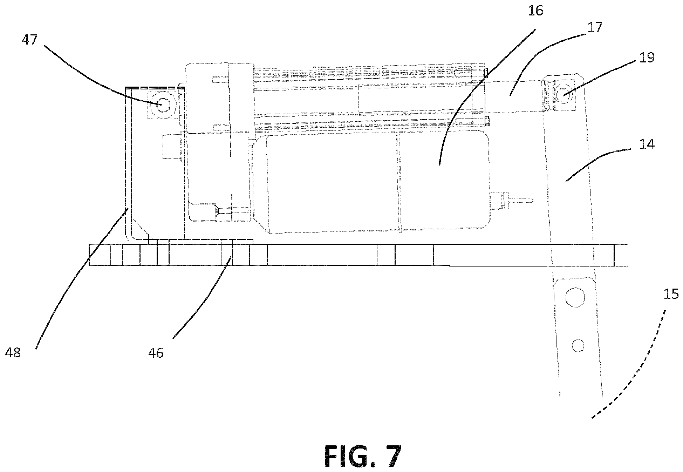

It is to be noted that the actuator 16 may be differently positioned with respect to the main lever 14. In particular, the actuator 16 and the auxiliary pivot 19 may be located in an opposite position with respect to the main pivot 15. With reference to the side views in Figures 5a and 6a, this means that the actuator 16 and the auxiliary pivot 19, instead of being in a lower position as shown, may be in an upper position. An arrangement according to this further possible embodiment is shown in Figure 7. According to this embodiment an actuator plate 46 is fixed to the support plate 12 and the actuator 16 is hinged to the actuator plate 46, preferably through an intermediate bracket 48, at a pivot 47. The actuator shaft 17 is connected to the main lever 14 at the auxiliary pivot 19, which in this case is located above the main pivot 15. According to this embodiment, the shaft 3 and the actuator 16 are in opposite positions with respect to the main pivot 15.

Further details of the various motor components will be now given by referring to exemplary embodiments of the invention.

The actuator 16 is preferably located inside the covering box 2. As already stated, the actuator 16 is preferably an electromechanical actuator of the linear type. It is driven by a control unit which manages the movements, particularly at the start, and which can be configured to protect the motor against overloads. Two end stroke switches connected to the control unit can be provided.

The short-circuiting bushing 11 can be mounted on the shaft 3 with clearance and be rotatably coupled to the shaft 3 for example by a key (not shown in the Figures). The axial movement of the short-circuit bushing 11 can be obtained for example by stud rollers and levers. In this manner, the short-circuiting bushing 11 can move along the shaft 3, rotating integrally with the latter, between the short-circuiting and the non-short-circuiting positions.

According to a possible embodiment, the short-circuiting bushing 11 comprises a circumferential groove (not shown in the Figures) suitable to be engaged by the above mentioned stud bearings 20 such that the above described movements between the short-circuiting bushing 11 and the main levers 14, while the short-circuiting bushing 11 rotates integrally with the shaft 3, are possible.

The short-circuiting bushing 11 comprises contacts 24 configured so to be connected to corresponding contacts 25 in the above mentioned contacts plate 42 - in turn connected to the rotor windings - when the short-circuiting bushing 11 is in short-circuiting position. The short-circuiting bushing 11 contacts 24 are electrically connected in such a manner that, when they engage the contacts 25 in contacts plate 42, the rotor windings (and the rings 6) are short-circuited.

Referring now to the ring bushing 5, the rings 6, which can be made for example of a stainless steel, are electrically insulated as long as the short-circuiting bushing 11 is in the non-short-circuiting position. To this purpose, advantageously, the rings 6 are positioned at an axial distance one to another, and the ring bushing 5 comprises a plurality of bars 27 longitudinally extending along the shaft 3 axial direction and arranged circumferentially around it. Bars 27 are made of an electrically conductive material, such as copper, and are covered by an electrically insulating material. The electrically insulating material has the function of electrically insulating the rings 6. Moreover, each ring 6 is connected to one connecting bar 4 (for the connection to a respective rotor winding phase) and the conductive parts of two bars 27. The connecting bars 4 and the bars 27 are in turn electrically connected to the contacts plate 42.

With reference now to the brushes assembly 9, it comprises a brushes support 28 for each ring 6. The brushes supports 28 are preferably positioned spaced one to another in the axial direction of the shaft 3. In accordance with an embodiment, each brushes support 28 comprises two half-plates 29, carrying one or more brushes 10, hinged to a fixed plate 30 at a plates pivot 31 so to be rotatable relative to the latter around an axis which is preferably parallel to the shaft 3 longitudinal direction. Each half-plate 29 extend in a circumferential direction of the shaft 3 and supports the brushes 10 such that the brushes 10 are in contact with the ring 6 in a substantially radial direction of the shaft 3 when the brushes assembly 9 is in the lowered position. The passage to the raised position of the brushes assembly 9 corresponds to a rotation of the half-plates 29 around the plates pivot 31 such that the half-plates 29 spread one relative to the other, preferably in a symmetrical manner. These movements of the half-plates 29 are driven by the above mentioned lanyards 23 which can be connected to the half-plates 29 for example at lanyards holes 37. Elastic means, such as one or more traction springs 45, can act between the two half-plates 29 such as to contrast the above-mentioned spread movement thereof. In other words, the elastic means act such that the brushes assembly 9 is solicited towards the lowered position and the brushes 10 are pushed on the rings 6 in order to grant a continuous electric contact while the brushes are engaged to the rings.

According to a possible embodiment, each half-plate 29 comprises a brush holder 32 containing at least one brush 10. The brushes 10 are slidable along said brush holder 32 in a radial direction with respect to the shaft 3. An elastic means, for example one or more compression springs 40, pushes the brush 10 against the respective ring 6 in radial direction.

The fixed plate 30 of each brushes assembly 9 is fixed to a support bracket 35 of the support plate 12, wherein the support bracket 35 extends preferably longitudinally along the shaft 3 longitudinal direction. In order to electrically insulating the rings 6 when the short-circuiting bushing 11 is in the non-short-circuiting position, the brushes assembly 9, advantageously, comprises one or more electrically insulating spacers 36 positioned between the support bracket 35 and the fixed plates 30.

Advantageously, the support bracket 35 comprises lanyards guiding means 41 for guiding the lanyards 23 from the lanyards pivot 22 to the lanyard holes 37, such that the half-plates 29 can perform the above mentioned rotations around the plates pivot 31.

In accordance with an embodiment, each brushes assembly 9 comprises protruding portions 38, which can be for example part of the fixed plate 30, extending transversally, preferably perpendicularly, to the shaft 3 axial direction. Still more preferably, the protruding portions 38 extend on both sides of the brushes assembly 9. The protruding portions 38 are electrically connected to the brushes 10 and electrically insulated from the support bracket 35. For example, the protruding portions 38 can be positioned between the insulating spacers 36 and the fixed plate 30, wherein the fixed plate 30, the plates pivot 31, the half-plates 29 and the brush holders 32 are made of electrically conducting materials.

According to a possible embodiment, the above described support bracket 35 may also form the actuator plate 46 when the actuator 16 is in an upper position (see figure 7).

Advantageously, the unit 1 comprise auxiliary conductive bars 39 for electrically connecting the protruding portions 38 to the rheostat connections plate 43. It is to be noted that, as already discussed above, the rheostat cables housing 7 can be positioned on both sides of the shaft 3. Therefore, depending of the position of the rheostat, the latter can be connected to the protruding portions 38, through the auxiliary conductive bars 39, on both sides thereof.

To the above-mentioned embodiments of a wound rotor motor according to the invention, the skilled person, in order to meet specific current needs, can make several additions, modifications, or substitutions of elements with other operatively equivalent elements, without however departing from the scope of the appended claims.

## Claims

1. A wound-rotor motor comprising:
- a stator;
- a rotor having one or more rotor windings;
- a rotatable shaft (3) for supporting the rotor;
- a slipring unit (1) comprising:
- a support plate (12);
- a ring bushing (5) integrally coupled to the shaft (3) and carrying one or more electrically conductive rings (6), each electrically connected to one of said one or more rotor windings;
- one or more brushes assemblies (9), each comprising one or more brushes (10), and a brushes lifting mechanism (21) for moving said one or more brushes (10) between a lowered position, wherein said one or more brushes (10) are in contact with a respective one of said one or more electrically conductive rings (6) in a substantially radial direction of the shaft (3), and a raised position, wherein said one or more brushes (10) are at a distance from the respective one of said one or more electrically conductive rings (6);
- a short-circuiting bushing (11) integrally rotatable with and slidingly movable relative to the shaft (3) between a short-circuiting position, wherein the short-circuiting bushing (11) interacts with the ring bushing (5) such that the one or more electrically conductive rings (6) and the one or more rotor windings are short-circuited, and a non-short circuiting position, wherein each of the one or more rotor windings is electrically insulated from the others of the one or more rotor windings and from the one or more electrically conductive rings (6);
- an actuator (16) fixedly connected to the support plate (12), wherein the actuator (14) is a linear actuator comprising an actuator shaft (17);
- at least a main lever (14) hinged to the support plate (12), so to be rotatable relative to the support plate (12) between a first position and a second position, and connected directly or indirectly to the actuator shaft (17), so that the main lever (14) is moved by the actuator (16) between the first position and the second position, wherein the main lever (14) is further connected to the short-circuiting bushing (11) and to the brushes lifting mechanism (21) such that, when the main lever (14) is in the first position, the brushes (10) are in the lowered position and the short-circuiting bushing (11) is in the non-short-circuiting position, and, when the main lever (14) is in the second position, the brushes (10) are in the raised position and the short-circuiting bushing (11) is in the short-circuiting position,
**characterized in that** the actuator shaft (17) is parallel to the shaft (3).

2. Wound-rotor motor according to claim 1, wherein the main lever (14) is hinged to the support plate (12) at a main pivot (15), wherein the main pivot (15) and the actuator (16) are in opposite positions with respect to the shaft (3).

3. Wound-rotor motor according to claim 1, wherein the main lever (14) is hinged to the support plate (12) at a main pivot (15), wherein the shaft (3) and the actuator (16) are in opposite positions with respect to the main pivot (15).

4. Wound-rotor motor according to any of the preceding claims, wherein the actuator shaft (17) is movable between a retracted position and an extended position and connected directly or indirectly to the main lever (14) such that, when the actuator shaft (17) is in the retracted position, the main lever (14) is in the first position, and when the actuator shaft (17) is in the extended position, the main lever (14) is in the second position.

5. Wound-rotor motor according to claim 4, further comprising an intermediate lever (18) hinged to the actuator shaft (17) on one side and to the main lever (14) on a second side at an auxiliary pivot (19).

6. Wound-rotor motor according to claim 4, wherein the actuator shaft (17) is directly connected to the main lever (14) at an auxiliary pivot (19) and is hinged to an actuator plate (46) fixed to the support plate (12).

7. Wound-rotor motor according to any of the preceding claims, wherein the main lever (14) is connected to the short-circuiting bushing (11) by stud bearings (20), wherein the short-circuiting bushing (11) comprises a circumferential groove engaged by said stud bearings (20).

8. Wound-rotor motor according to any of the preceding claims, wherein the one or more electrically conductive rings (6) are positioned at an axial distance one to another, and the ring bushing (5) comprises a plurality of bars (27) longitudinally extending along the shaft (3) axial direction and arranged circumferentially around it, wherein said bars (27) are made of an electrically conductive material and are covered by an electrically insulating material.

9. Wound-rotor motor according to any of the preceding claims, wherein the brushes lifting mechanism (21) comprises one or more lanyards (23) connected to the main lever (14) at a lanyards pivot (22) on one side and to the brushes (10) to the other side.

10. Wound-rotor motor according to the preceding claim, wherein each of said one or more brushes assemblies (9) comprises a fixed plate (30), two half-plates (29) carrying one or more brushes (10) and hinged to the fixed plate (30) at a plates pivot (31), and elastic means (45) acting between said two half-plates (29) so to oppose to their relative spread, wherein the two half-plates (29) are driven by said one or more lanyards (23).

11. Wound-rotor motor according to the preceding claim, wherein each half-plate (29) comprises a brush holder (32) containing at least one brush (10) slidably movable in said brush holder (32), and elastic means (40) configured for pushing the at least one brush (10) towards the respective electrically insulating ring (6).

12. Wound-rotor motor according to any of the preceding claims, wherein said support plate (12) comprises a support bracket (35) supporting said brushes assemblies (9), extending longitudinally along the shaft (3) longitudinal direction.

13. Wound-rotor motor according to claim 12, wherein said brushes assemblies (9) comprise one or more electrically insulating spacers (36) positioned between the support bracket (35) and the brushes assembly (9) fixed plates (30).

14. Wound-rotor motor according to claim 12 or 13, wherein the support bracket (35) comprises lanyards guiding means (41) for guiding said lanyards (23) from the lanyards pivot (22) to the half-plates (29) of each brushes assembly (9).

15. Wound-rotor motor according to any of the preceding claims, wherein each of said brushes assemblies (9) comprises conductive protruding portions (38) extending transversally to the shaft (3) axial direction for the connection to one or more rheostat connections plates (43) through auxiliary conductive bars (39), said protruding portions (38) being electrically connected to the brushes (10).

## Patentansprüche

1. Wickelrotormotor, umfassend:
- einen Stator;
- einen Rotor, der eine oder mehrere Rotorwicklungen aufweist;
- eine rotierbare Welle (3) zum Tragen des Rotors;
- eine Schleifringeinheit (1), umfassend:
- eine Trägerplatte (12);
- eine Ringbuchse (5), die einstückig mit der Welle (3) gekoppelt ist und einen oder mehrere elektrisch leitfähige Ringe (6) befördert, die jeweils elektrisch mit einer der einen oder mehreren Rotorwicklungen verbunden sind;
- eine oder mehrere Bürstenanordnungen (9), die jeweils eine oder mehrere Bürsten (10) umfassen, und einen Bürstenhubmechanismus (21) zum Bewegen der einen oder mehreren Bürsten (10) zwischen einer abgesenkten Position, wobei die eine oder mehreren Bürsten (10) in einer im Wesentlichen radialen Richtung der Welle (3) mit einem der einen oder mehreren elektrisch leitfähigen Ringe (6) in Berührung sind, und einer erhöhten Position, wobei die eine oder mehreren Bürsten (10) einen Abstand von dem jeweiligen der einen oder mehreren elektrisch leitfähigen Ringe (6) haben;
- eine Kurzschlussbuchse (11), die einstückig rotierbar mit und verschiebbar relativ zu der Welle (3) ist, zwischen einer Kurzschlussposition, wobei die Kurzschlussbuchse (11) mit der Ringbuchse (5) derart zusammenwirkt, dass der eine oder die mehreren elektrisch leitfähigen Ringe (6) und eine oder mehrere Rotorwicklungen kurzgeschlossen sind, und einer nicht kurzschließenden Position, wobei jede der Rotorwicklungen elektrisch von den anderen der einen oder mehreren Rotorwicklungen und von einem oder mehreren elektrisch leitfähigen Ringen (6) isoliert ist;
- einen Aktuator (16), der fest mit der Trägerplatte (12) verbunden ist, wobei der Aktuator (14) ein linearer Aktuator ist, der eine Aktuatorwelle (17) umfasst;
- wenigstens einen Haupthebel (14), der an der Trägerplatte (12) angelenkt ist, so dass er relativ zu der Trägerplatte (12), zwischen einer ersten Position und einer zweiten Position, rotierbar ist, und direkt oder indirekt mit der Aktuatorwelle (17) verbunden ist, so dass der Haupthebel (14) durch den Aktuator (16) zwischen der ersten Position und der zweiten Position bewegt wird, wobei der Haupthebel (14) ferner mit der Kurzschlussbuchse (11) und mit dem Bürstenhubmechanismus (21) derart verbunden ist, dass, wenn sich der Haupthebel (14) in der ersten Position befindet, sich die Bürsten (10) in der abgesenkten Position befinden und sich die Kurzschlussbuchse (11) in der nicht kurzschließenden Position befindet, und wenn sich der Haupthebel (14) in der zweiten Position befindet, sich die Bürsten (10) in der angehobenen Position befinden und die Kurzschlussbuchse (11) sich in der Kurzschlussposition befindet, **dadurch gekennzeichnet, dass** die Aktuatorwelle (17) parallel zu der Welle (3) ist.

2. Wickelrotormotor nach Anspruch 1, wobei der Haupthebel (14) an einem Hauptdrehpunkt (15) an der Trägerplatte (12) angelenkt ist, wobei sich der Hauptdrehpunkt (15) und der Aktuator (16) in entgegengesetzten Positionen hinsichtlich der Welle (3) befinden.

3. Wickelrotormotor nach Anspruch 1, wobei der Haupthebel (14) an einem Hauptdrehpunkt (15) an der Trägerplatte (12) angelenkt ist, wobei sich die Welle (3) und der Aktuator (16) in entgegengesetzten Positionen hinsichtlich des Hauptdrehpunkts (15) befinden.

4. Wickelrotormotor nach einem der vorhergehenden Ansprüche, wobei die Aktuatorwelle (17) zwischen einer eingefahrenen Position und einer ausgefahrenen Position beweglich und direkt oder indirekt mit dem Haupthebel (14) derart verbunden ist, dass, wenn sich die Aktuatorwelle (17) in der eingezogenen Position befindet, sich der Haupthebel (14) in der ersten Position befindet, und wenn sich die Aktuatorwelle (17) in der verlängerten Position befindet, sich der Haupthebel (14) in der zweiten Position befindet.

5. Wickelrotormotor nach Anspruch 4, ferner umfassend einen Zwischenhebel (18), der an einer Seite an der Aktuatorwelle (17) und an einer zweiten Seite an dem Haupthebel (14) an einem Hilfsdrehpunkt (19) angelenkt ist.

6. Wickelrotormotor nach Anspruch 4, wobei die Aktuatorwelle (17) an einem Hilfsdrehpunkt (19) direkt mit dem Haupthebel (14) verbunden ist und an einer Aktuatorplatte (46), die an der Trägerplatte (12) befestigt ist, angelenkt ist.

7. Wickelrotormotor nach einem der vorhergehenden Ansprüche, wobei der Haupthebel (14) durch Stehbolzenlager (20) mit der Kurzschlussbuchse (11) verbunden ist, wobei die Kurzschlussbuchse (11) eine Umfangsnut umfasst, die von den Stehbolzenlagern (20) in Eingriff genommen ist.

8. Wickelrotormotor nach einem der vorhergehenden Ansprüche, wobei der eine oder die mehreren elektrisch leitfähigen Ringe (6) in einem axialen Abstand zueinander angeordnet sind und die Ringbuchse (5) mehrere Stangen (27) umfasst, die sich in Längsrichtung entlang der Welle (3) in axialer Richtung erstrecken und in Umfangsrichtung um sie herum angeordnet sind, wobei die Stangen (27) aus einem elektrisch leitfähigen Material bestehen und von einem elektrisch isolierenden Material bedeckt sind.

9. Wickelrotormotor nach einem der vorhergehenden Ansprüche, wobei der Bürstenhubmechanismus (21) ein oder mehrere Lanyards (23) umfasst, die mit dem Haupthebel (14) an einem Lanyard-Drehpunkt (22) auf einer Seite und auf einer anderen Seite mit den Bürsten (10) verbunden sind.

10. Wickelrotormotor nach dem vorhergehenden Anspruch, wobei jede der einen oder mehreren Bürstenanordnungen (9) eine feste Platte (30), zwei Halbplatten (29), die eine oder mehrere Bürsten (10) tragen und an einem Plattendrehpunkten (31) an der festen Platte (30) angelenkt sind, und elastische Mittel (45), die zwischen den beiden Halbplatten (29) wirken, um ihrer relativen Ausbreitung entgegenzuwirken, umfasst, wobei die beiden Halbplatten (29) von den einen oder mehreren Lanyards (23) angetrieben werden.

11. Wickelrotormotor nach dem vorhergehenden Anspruch, wobei jede Halbplatte (29) einen Bürstenhalter (32) umfasst, der wenigstens eine Bürste (10) enthält, die in dem Bürstenhalter (32) verschiebbar beweglich ist, und elastische Mittel (40), die konfiguriert sind, um die wenigstens eine Bürste (10) in Richtung des jeweiligen elektrisch isolierenden Rings (6) zu drücken.

12. Wickelrotormotor nach einem der vorhergehenden Ansprüche, wobei die Trägerplatte (12) eine Stützhalterung (35) umfasst, die die Bürstenanordnungen (9) trägt und sich in Längsrichtung entlang der Welle (3) erstreckt.

13. Wickelrotormotor nach Anspruch 12, wobei die Bürstenanordnungen (9) einen oder mehrere elektrisch isolierende Abstandshalter (36) umfassen, die zwischen der Stützhalterung (35) und den festen Platten (30) der Bürstenanordnung (9) angeordnet sind.

14. Wickelrotormotor nach Anspruch 12 oder 13, wobei die Stützhalterung (35) Lanyards-Führungsmittel (41) zum Führen der Lanyards (23) von dem Lanyard-Drehpunkt (22) zu den Halbplatten (29) jeder Bürstenanordnung (9) umfasst.

15. Wickelrotormotor nach einem der vorhergehenden Ansprüche, wobei jede der Bürstenanordnungen (9) leitfähige hervorstehende Abschnitte (38) umfasst, die sich quer zu der axialen Richtung der Welle (3) erstrecken, für die Verbindung mit einer oder mehreren Rheostatverbindungsplatten (43), über Hilfsleitfähigkeitsstangen (39), wobei die hervorstehenden Abschnitte (38) elektrisch mit den Bürsten (10) verbunden sind.

## Revendications

1. Moteur à rotor bobiné comprenant :
- un stator ;
- un rotor doté d'un ou plusieurs enroulements de rotor ;
- un arbre rotatif (3) pour supporter le rotor ;
- une unité de bague collectrice (1) comprenant :
- une plaque de support (12) ;
- une douille de bague (5) accouplée intégralement à l'arbre (3) et portant une ou plusieurs bagues électriquement conductrices (6), chacune étant électriquement connectée à l'un desdits un ou plusieurs enroulements de rotor ;
- un ou plusieurs ensembles de balais (9), comprenant chacun un ou plusieurs balais (10), et un mécanisme de levage de balais (21) destinés à déplacer lesdits un ou plusieurs balais (10) entre une position abaissée, lesdits un ou plusieurs balais (10) étant en contact avec l'une respective desdites une ou plusieurs bagues électriquement conductrices (6) dans une direction sensiblement radiale de l'arbre (3), et une position relevée, lesdits un ou plusieurs balais (10) étant à une distance de l'une respective desdites une ou plusieurs bagues électriquement conductrices (6) ;
- une douille de court-circuitage (11) pouvant être en rotation intégralement avec et pouvant coulisser par rapport à l'arbre (3) entre une position de court-circuitage, dans laquelle la douille de court-circuitage (11) interagit avec la douille de bague (5) de telle sorte que l'une ou les plusieurs bagues électriquement conductrices (6) et l'un ou les plusieurs enroulements de rotor sont court-circuités, et une position de non court-circuitage, chacun de l'un ou des plusieurs enroulements de rotor étant électriquement isolé des autres de l'un ou des plusieurs enroulements de rotor et de l'une ou des plusieurs bagues électriquement conductrices (6) ;
- un actionneur (16) relié de manière fixe à la plaque de support (12), dans lequel l'actionneur (14) est un actionneur linéaire comprenant un arbre d'actionneur (17) ;
- au moins un levier principal (14) articulé sur la plaque de support (12), de manière à pouvoir tourner par rapport à la plaque de support (12) entre une première position et une seconde position, et relié directement ou indirectement à l'arbre d'actionneur (17),
de telle sorte que le levier principal (14) est déplacé par l'actionneur (16) entre la première position et la seconde position,
le levier principal (14) étant en outre relié à la douille de court-circuitage (11) et au mécanisme de levage de balais (21) de telle sorte que, lorsque le levier principal (14) est dans la première position, les balais (10) sont dans la position abaissée et la douille de court-circuitage (11) est dans la position de non court-circuitage, et, lorsque le levier principal (14) est dans la seconde position, les balais (10) sont dans la position relevée et la douille de court-circuitage (11) est dans la position de court-circuitage,
**caractérisé en ce que** l'arbre d'actionneur (17) est parallèle à l'arbre (3).

2. Moteur à rotor bobiné selon la revendication 1, dans lequel le levier principal (14) est articulé sur la plaque de support (12) au niveau d'un pivot principal (15), le pivot principal (15) et l'actionneur (16) étant dans des positions opposées par rapport à l'arbre (3).

3. Moteur à rotor bobiné selon la revendication 1, dans lequel le levier principal (14) est articulé sur la plaque de support (12) au niveau d'un pivot principal (15), dans lequel l'arbre (3) et l'actionneur (16) sont dans des positions opposées par rapport au pivot principal (15).

4. Moteur à rotor bobiné selon l'une quelconque des revendications précédentes, dans lequel l'arbre d'actionneur (17) est mobile entre une position rétractée et une position étendue et relié directement ou indirectement au levier principal (14) de telle sorte que, lorsque l'arbre d'actionneur (17) est dans la position rétractée, le levier principal (14) est dans la première position, et lorsque l'arbre d'actionneur (17) est dans la position déployée, le levier principal (14) est dans la seconde position.

5. Moteur à rotor bobiné selon la revendication 4, comprenant en outre un levier intermédiaire (18) articulé sur l'arbre d'actionneur (17) sur un côté et sur le levier principal (14) sur un second côté au niveau d'un pivot auxiliaire (19).

6. Moteur à rotor bobiné selon la revendication 4, dans lequel l'arbre d'actionneur (17) est directement relié au levier principal (14) au niveau d'un pivot auxiliaire (19) et est articulé sur une plaque d'actionneur (46) fixée à la plaque de support (12).

7. Moteur à rotor bobiné selon l'une quelconque des revendications précédentes, dans lequel le levier principal (14) est relié à la douille de court-circuitage (11) par des paliers à goujons (20), dans lequel la douille de court-circuitage (11) comprend une rainure circonférentielle mise en prise par lesdits paliers à goujons (20).

8. Moteur à rotor bobiné selon l'une quelconque des revendications précédentes, dans lequel l'une ou les plusieurs bagues électriquement conductrices (6) sont positionnées à une distance axiale les unes des autres, et la douille de bague (5) comprend une pluralité de barres (27) s'étendant longitudinalement le long de la direction axiale de l'arbre (3) et agencées circonférentiellement autour de celui-ci, dans lequel lesdites barres (27) sont constituées d'un matériau électriquement conducteur et sont recouvertes d'un matériau électriquement isolant.

9. Moteur à rotor bobiné selon l'une quelconque des revendications précédentes, dans lequel le mécanisme de levage de balais (21) comprend un ou plusieurs cordons (23) reliés au levier principal (14) au niveau d'un pivot de cordons (22) d'un côté et aux balais (10) de l'autre côté.

10. Moteur à rotor bobiné selon la revendication précédente, dans lequel chacun desdits un ou plusieurs ensembles de balais (9) comprend une plaque fixe (30), deux demi-plaques (29) portant un ou plusieurs balais (10) et articulées sur la plaque fixe (30) au niveau d'un pivot de plaques (31), et des moyens élastiques (45) agissant entre lesdites deux demi-plaques (29) de manière à s'opposer à leur propagation relative, dans lequel les deux demi-plaques (29) sont entraînées par lesdits un ou plusieurs cordons (23).

11. Moteur à rotor bobiné selon la revendication précédente, dans lequel chaque demi-plaque (29) comprend un porte-balai (32) contenant au moins un balai (10) mobile de manière coulissante dans ledit porte-balai (32), et des moyens élastiques (40) conçus pour pousser l'au moins un balai (10) vers la bague électriquement isolante respective (6).

12. Moteur à rotor bobiné selon l'une quelconque des revendications précédentes, dans lequel ladite plaque de support (12) comprend une patte de support (35) supportant lesdits ensembles de balais (9), s'étendant longitudinalement le long de la direction longitudinale de l'arbre (3).

13. Moteur à rotor bobiné selon la revendication 12, dans lequel lesdits ensembles de balais (9) comprennent un ou plusieurs entretoises électriquement isolantes (36) positionnées entre la patte de support (35) et les plaques fixes (30) d'ensemble de balais (9).

14. Moteur à rotor bobiné selon la revendication 12 ou 13, dans lequel la patte de support (35) comprend des moyens de guidage de cordons (41) pour guider lesdits cordons (23) du pivot de cordons (22) aux demi-plaques (29) de chaque ensemble de balais (9).

15. Moteur à rotor bobiné selon l'une quelconque des revendications précédentes, dans lequel chacun desdits ensembles de balais (9) comprend des parties saillantes conductrices (38) s'étendant transversalement vers la direction axiale de l'arbre (3) pour la connexion à une ou plusieurs plaques de connexion de rhéostat (43) à travers des barres conductrices auxiliaires (39), lesdites parties saillantes (38) étant électriquement connectées aux balais (10).
